# EUROPÄISCHE PATENTSCHRIFT

(11) **EP 2 979 773 B1**
(45) Veröffentlichungstag und Bekanntmachung des Hinweises auf die Patenterteilung: **02.09.2020**
(21) Anmeldenummer: 14179161.6
(22) Anmeldetag: 30.07.2014
(51) Int. Cl.: B21K 1/26, B21K 1/76, F16C 11/06

(54) **Gelenkgehäuse für eine Spurstange und Verfahren zu seiner Herstellung**
Joint housing for a track rod and it's method of manufacturing
Boîtier articulé pour une barre de connexion et sa méthode de fabrication

(43) Veröffentlichungstag der Anmeldung: 03.02.2016
(73) Patentinhaber: Presswerk Krefeld GmbH & Co. KG, 47809 Krefeld (DE)
(72) Erfinder: Odenkirchen, Jürgen, 41363 Jüchen (DE); Skirlo, Stefan, 40625 Düsseldorf (DE)
(74) Vertreter: Rausch Wanischeck-Bergmann Brinkmann

(56) Entgegenhaltungen:
- EP-A1- 0 766 015
- WO-A1-2004/039529
- DE-A1-102008 053 796
- DE-U- 1 875 317
- JP-A- S58 112 626
- US-A- 4 202 082

## Beschreibung

Die Erfindung betrifft ein Gelenkgehäuse für eine Spurstange, mit einem Schaftgehäuse zur Verbindung mit einem Axialzapfen und einem Kugelgehäuse zur Aufnahme eines Kugelgelenks. Zudem betrifft die Erfindung ein Verfahren zur Herstellung eines Gelenkgehäuses für eine Spurstange, wobei ein Rohling bereitgestellt wird, wobei aus einem Bereich des Rohlings ein Schaftgehäuse zur Verbindung mit einem Axialzapfen und aus einem anderen Bereich des Rohlings ein Kugelgehäuse zur Aufnahme eines Kugelgelenks ausgebildet wird.

Die DE 18 75 317 U betrifft ein Kugelgelenk für Lenk-, Schub- und Spurstangen. Das Kugelgelenk verfügt über einen Axialzapfen mit einem Außengewinde, mit welchem dasselbe mit einer Lenk-, Schub- oder Spurstange verbunden werden kann. Diese Druckschrift thematisiert ausschließlich die Wahl eines geeigneten Materials für die Gelenkpfanne des Kugelgelenks.

Die WO 2004/039529 A1 betrifft ein Verfahren zur Herstellung eines Spurstangengehäuses. Es ist in expliziter Abkehr vom Herstellverfahren mit einem Schmiedeprozess und einer nachgeschalteten mechanischen Zerspanung bzw. alternativ mit einem Kaltschmiedevorgang vorgesehen, das Spurstangengehäuse aus zwei baulich voneinander getrennten Einzelteilen zu fertigen, welche erst anschließend durch Widerstandspressschweißen sowie einen daran anschließenden Schweißvorgang mit einer Verbindung durch Materialanhäufungen vorzusehen. Das so hergestellte Spurstangengehäuse kann anschließend gebogen werden, wobei jedoch gerade der Verbindungsbereich zwischen einem Schaftelement einerseits und einem Spurstangenkopf andererseits nicht verbogen werden soll.

Gattungsgemäße Gelenkgehäuse sind hinlänglich aus dem Stand der Technik bekannt, beispielsweise aus der DE 10 2008 053 796 A1. Ein solches Gelenkgehäuse dient dazu, den Axialzapfen einer Spurstange gelenkig mit einem Radträger eines Fahrzeuges zu verbinden. Das Schaftgehäuse dient hierbei der Aufnahme des Axialzapfens. Der Axialzapfen kann beispielsweise in eine Bohrung mit Innengewinde des Schaftgehäuses eingeschraubt werden. Das Kugelgehäuse dient der Verbindung mit dem Radträger. Hierzu stellt das Kugelgehäuse eine sphärische Aufnahme bereit, in welcher eine mit dem Radträger verbindbare Kugel beweglich gelagert werden kann. Diese Anordnung erlaubt Rotationen zwischen dem Radträger und dem Axialzapfen um alle drei Raumrichtungen.

Das Schaftgehäuse und das Kugelgehäuse gehen durch einen Übergangsbereich ineinander über. Der Übergangsbereich verbindet somit das Schaftgehäuse mit dem Kugelgehäuse.

Das Schaftgehäuse muss konstruktionsbedingt einen Mindestdurchmesser aufweisen, welcher sich in Abhängigkeit der im Schaftgehäuse vorgesehenen Bohrung mit Innengewinde zur Aufnahme des Axialzapfens ergibt. An das Kugelgehäuse können hingegen ganz andere geometrische beziehungsweise mechanische Anforderungen bestehen. Es ist daher aus dem Stand der Technik bekannt den Übergangsbereich "platt zu drücken". Dies geschieht bislang beispielsweise durch Zerspanen oder Schmieden. Der aus dem Stand der Technik bekannte "platt gedrückte" Übergangsbereich zeichnet sich dadurch aus, dass er zwar mit Bezug auf eine erste Raumrichtung gegenüber dem Durchmesser des Schaftgehäuses reduziert ist, mit Bezug auf eine zweite Raumrichtung jedoch genauso breit oder sogar breiter als das Schaftgehäuse ist. Dies ist anschaulich in den beiden Figuren der DE 10 2008 053 796 A1 dargestellt.

Wenngleich sich die aus dem Stand der Technik bekannten Gelenkgehäuse bewährt haben, besteht dennoch Verbesserungsbedarf. So sind mit den bekannten Verfahren zur Zerspanung oder zum Schmieden des Übergangsbereichs hohe Kosten, eine unzureichende Nachhaltigkeit sowie gestalterische Einschränkungen bei der Konstruktion des Gelenkgehäuses verbunden.

Vor diesem Hintergrund ist es die **Aufgabe** der vorliegenden Erfindung, ein gattungsgemäßes Gelenkgehäuse kostengünstiger und nachhaltiger herstellen zu können sowie eine größere gestalterische Freiheit bei der Konstruktion zu ermöglichen.

Zur **Lösung** schlägt die Erfindung ein Gelenkgehäuse mit den Merkmalen des Anspruchs 1 vor.

Erfindungsgemäß ist der Querschnitt des Übergangsbereichs also nicht mehr nur, wie aus dem Stand der Technik bekannt, in bestimmten Raumrichtungen verjüngt, sondern vielmehr über den gesamten Querschnitt. Dies bedeutet mit Bezug auf die Gelenkachse des Schaftgehäuses, dass an jeder beliebigen Stelle in Umfangsrichtung eine Verjüngung beziehungsweise Verkleinerung des Querschnitts des Übergangsbereichs gegenüber dem Querschnitt des Schaftgehäuses ausgebildet ist. Der Übergangsbereich ist in jeder radialen Richtung von der Außenoberfläche des Schaftgehäuses beabstandet. Das Schaftgehäuse geht durch eine Art vollumfänglichen Wellenabsatz in den Übergangsbereich über. Der Durchmesser des Übergangsbereichs ist gegenüber dem Durchmesser des Schaftgehäuses reduziert. Die Querschnittskontur des Übergangsbereichs und/oder des Schaftgehäuses kann kreisrund ausgebildet sein.

Im Unterschied zum Stand der Technik ist der Übergangsbereich nicht durch Zerspanen oder Schmieden bearbeitet, sondern durch Kaltumformung. Kaltumformung bezeichnet das Umformen von Metallen bei einer Temperatur deutlich unterhalb der Rekristallisationstemperatur. Der Vorteil des Kaltumformens liegt darin, dass entweder keine weitere Nachbearbeitung oder nur eine geringe Nacharbeit erforderlich ist. Durch das Kaltumformen können bereits sehr kleine Maßtoleranzen erreicht werden. Der Übergangsbereich kann somit durch Kaltumformen "(near) net shape" gebildet werden. Hinzu kommt, dass sich die Festigkeit des kaltumgeformten Materials durch Kaltverfestigung erhöht.

Das erfindungsgemäße Gelenkgehäuse weist einen Übergangsbereich auf, der über den gesamten Querschnitt gegenüber dem Schaftgehäuse verjüngt ausgebildet ist. Dies bringt den Vorteil mit sich, dass das Kugelgehäuse relativ zum Schaftgehäuse besonders leicht dreidimensional gebogen werden kann. Eine solche dreidimensionale Biegung kann je nach Einsatzzweck der Spurstange erforderlich sein. Durch den über den gesamten Querschnitt verjüngten Übergangsbereich kann erreicht werden, dass die Biegesteifigkeit des Übergangsbereichs in beiden Raumrichtungen rechtwinklig zur Längsachse des Schaftgehäuses gleich ausgebildet ist. Dadurch bestehen gegenüber dem aus dem Stand der Technik bekannten Gelenkgehäuse größere gestalterische Freiheiten bei der Konstruktion des Gelenkgehäuses. Es können auch solche Biegungen zwischen Schaftgehäuse einerseits und Kugelgehäuse andererseits erreicht werden, die bei den aus dem Stand der Technik bekannten Lösungen gar nicht möglich waren.

Hinzu kommt, dass der Übergangsbereich nach dem Biegevorgang unter Umständen nicht nachbearbeitet werden muss, da die gewünschte Geometrie und die gewünschten Eigenschaften bereits durch die Kaltumformung endfertig erreicht wurden. Insofern vereinfacht sich die Herstellung des erfindungsgemäßen Gelenkgehäuses erheblich. Hinzu kommt, dass beim Kaltumformen keine Späne anfallen wie beim Zerspanen, die dann entsorgt werden müssen. Insofern kann ein erfindungsgemäßes Gelenkgehäuse auch nachhaltiger hergestellt werden.

Gemäß einer vorteilhaften Weiterbildung der Erfindung sind die Querschnitskonturen des Schaftgehäuses und des Übergangsbereichs gleich ausgebildet, die Querschnittskonturen des Übergangsbereichs jedoch kleiner skaliert ausgebildet. Dies bedeutet, dass die beiden Querschnittskonturen qualitativ gleich geformt sind. Die Querschnittskontur des Übergangsbereichs ist jedoch im Verhältnis kleiner skaliert als die Querschnittskontur des Schaftgehäuses. Ein Verbindungsbereich zwischen der Außenoberfläche des Schaftgehäuses und der Außenoberfläche des Übergangsbereichs ist über den gesamten Umfang gleich ausgebildet. Dies vereinfacht die weitere Bearbeitung des Gelenkgehäuses, wobei auch konstruktiv sehr aufwendige Gestaltungen ermöglicht werden.

Gemäß einer vorteilhaften Weiterbildung der Erfindung verlaufen der Übergangsbereich und das Schaftgehäuse zumindest teilweise koaxial. Ihre Längsachsen könnten jedoch auch exzentrisch verlaufen. Der Übergangsbereich und das Schaftgehäuse können sich zumindest teilweise in parallelen Richtungen erstrecken. Der Übergangsbereich und/oder das Schaftgehäuse können rotationssymetrisch ausgebildet sein.

Der Übergangsbereich ist erfindungsgemäß mit auf seine Längsachse gekrümmt ausgebildet. Die Krümmung kann um eine oder kombiniert um zwei Achsen ausgebildet sein. Diese Achsen verlaufen radial zur Längsachse und sind linear unabhängig. Dies bedeutet, dass sich sowohl das Kugelgehäuse als auch das Schaftgehäuse gerade erstrecken können. Eine winklige Anordnung zueinander wird durch den gekrümmten Übergangsbereich erreicht. Der Übergangsbereich kann besonders einfach gekrümmt werden, da er über dem gesamten Querschnitt gegenüber dem Schaftgehäuse und/oder dem Kugelgehäuse verjüngt ausgebildet ist. Gekrümmt im Sinne der Erfindung umfasst einen bogenförmigen Verlauf, einen Knick, das heißt spitzen Verlauf und/oder dergleichen.

Verfahrensseitig wird zur Lösung ein Verfahren gemäß Anspruch 5 vorgeschlagen, wobei am Rohling ein Übergangsbereich zwischen dem Bereich für das Schaftgehäuse und dem Bereich für das Kugelgehäuse über den gesamten Querschnitt gegenüber dem Schaftgehäuse verjüngt wird.

Im Unterschied zum Stand der Technik, beispielsweise in Form der DE 10 2008 053 796 A1, wird dieser Übergangsbereich also nicht nur partiell, sondern vielmehr über den gesamten Querschnitt verjüngt. Dies bedeutet, dass über den gesamten Umfang des Übergangsbereichs eine Verjüngung stattfindet. Der Übergangsbereich kann rotationssymmetrisch verjüngt werden.

Der Übergangsbereich kann verjüngt werden, bevor das Schaftgehäuse und das Kugelgehäuse ausgebildet werden. Er kann jedoch auch erst anschließend oder zusammen mit dem Schaftgehäuse und/oder dem Kugelgehäuse ausgebildet werden. Erfindungsgemäß wird der Übergangsbereich durch Kaltumformung verjüngt. Dies wurde vorstehend bereits erläutert.

Ein nach dem erfindungsgemäßen Verfahren hergestelltes Gelenkgehäuse hat den Vorteil, dass eine Verbiegung zwischen Schaftgehäuse und Kugelgehäuse einfacher und hinsichtlich der Gestaltungsfreiheit flexibler möglich ist. Zudem führt die Verjüngung über den gesamten Querschnitt zu einer deutlichen Gewichtsreduktion, sodass ein nach dem erfindungsgemäßen Verfahren hergestelltes Gelenkgehäuse als Leichtbau-Gelenkgehäuse bezeichnet werden kann.

Weitere Vorteile und Merkmale der Erfindung ergeben sich aus der nachfolgenden Figurenbeschreibung. Es zeigen:
- Figur 1:: ein aus dem Stand der Technik bekanntes Gelenkgehäuse im Längsschnitt;
- Figur 2:: das aus dem Stand der Technik bekannte Gelenkgehäuse gemäß Figur 1 in Draufsicht;
- Figur 3:: eine Ausführungsform eines erfindungsgemäßen Gelenkgehäuses in perspektivischer Darstellung;
- Figur 4:: eine Schnittansicht entlang der Linie IV - IV in Figur 3.
- Figur 5:: schematisch die Durchführung eines erfindungsgemäßen Verfahrens.

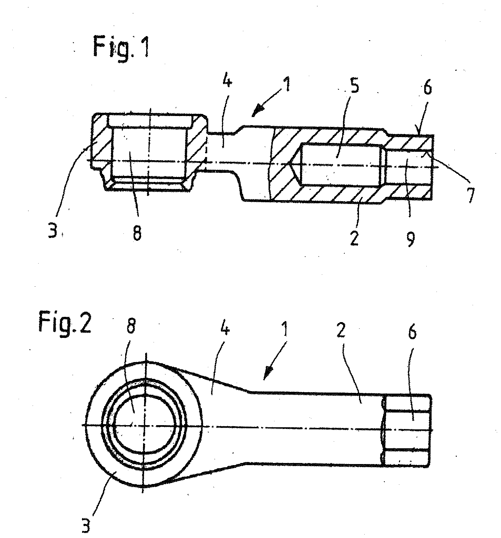

Figur 1 zeigt ein Gelenkgehäuse 1 nach dem Stand der Technik. Dieses weist ein Schaftgehäuse 2 sowie ein Kugelgehäuse 3 auf. Das Schaftgehäuse 2 und das Kugelgehäuse 3 sind durch einen Übergangsbereich 4 miteinander verbunden. Im Schaftgehäuse 2 ist eine Gewindebohrung 5 vorgesehen, welche über einen Gewindebereich 9 als Innengewinde verfügt. Das Innengewinde weist einen Gewindekerndurchmesser 7 auf. Das Schaftgehäuse 2 ist im Querschnitt kreisrund ausgebildet. An den kreisrunden Querschnitt schließt sich eine endseitig vorgesehene Schlüsselfläche 6 an. Diese ist als Außensechskant ausgebildet. In die Gewindebohrung 5 kann ein mit einem entsprechenden Außengewinde versehener Axialzapfen eingeschraubt werden.

Das Kugelgehäuse 3 weist in Figur 1 ein Durchgangsloch 8 auf. Das Kugelgehäuse 3 könnte aber auch einseitig geschlossen ausgeführt sein. In diesem Durchgangsloch 8 kann eine Kugel aufgenommen werden. Die Kugel kann an einem Radträger eines Fahrzeugs angeordnet werden.

In Zusammenschau mit Figur 2 wird deutlich, dass der Übergangsbereich 4 zwar in Richtung der Längsachse des Durchgangslochs 8 mit Bezug auf das Schaftgehäuse 2 und das Kugelgehäuse 3 verjüngt ist. Jedoch ist der Übergangsbereich 4 in einer Richtung radial zum Durchgangsloch zumindest gegenüber dem Schaftgehäuse 2 deutlich verbreitert. Diese Ausbildung des Übergangsbereichs 4 gemäß dem Stand der Technik kann als plattgedrückt bezeichnet werden.

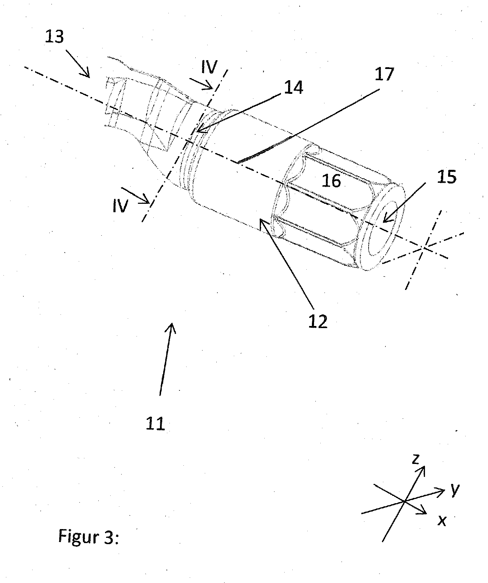

Figur 3 zeigt hingegen eine Ausführungsform eines erfindungsgemäßen Gelenkgehäuses 11. Dieses weist ein Schaftgehäuse 12 und ein Kugelgehäuse 13 auf. Das Schaftgehäuse 12 und das Kugelgehäuse 13 sind durch einen Übergangsbereich 14 miteinander verbunden. Das gesamte Gelenkgehäuse 11 kann einstückig, insbesondere aus einem Guss ausgebildet sein.

Das Schaftgehäuse 12 weist eine kreisrunde Querschnittskontur auf. Lediglich an einem dem Kugelgehäuse 13 gegenüberliegenden Ende ist eine Schlüsselfläche 16 vorgesehen. Diese ist als Außensechskant ausgebildet. An diesem dem Kugelgehäuse 13 abgewandten Ende ist zudem eine Gewindebohrung 15 in das Schaftgehäuse 12 eingebracht. Die Gewindebohrung ist zentrisch im Schaftgehäuse 12 ausgebildet. Sie weist ein Innengewinde auf.

Der Übergangsbereich 14 ist gegenüber dem Schaftgehäuse 12 verjüngt ausgebildet. Der Übergangsbereich 14 ist gegenüber dem gesamten Querschnitt verjüngt ausgebildet. Der Übergangsbereich ist im Querschnitt kreisrund ausgebildet. Der Übergangsbereich 14 und das Schaftgehäuse 12 verlaufen koaxial. Der Übergangsbereich 14 ist gekrümmt ausgebildet, sodass das Kugelgehäuse 13 und das Schaftgehäuse 12 winklig zueinander ausgerichtet sind. Die Krümmung kann um die y-Achse und/oder die z-Achse in Figur 3 ausgebildet sein.

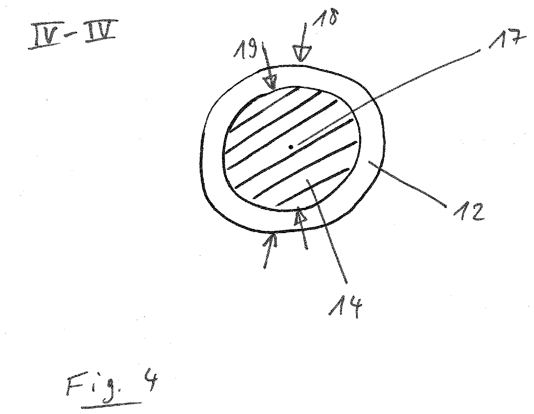

Figur 4 zeigt eine Querschnittsansicht entlang der Linie IV - IV. in Figur 3. Zu sehen ist der geschnittene Übergangsbereich 14. Hinter diesem Übergangsbereich 14 ist die Querschnittskontur des Schaftgehäuses 12 zu sehen. Das Schaftgehäuse 12 ist im Querschnitt kreisrund. Der Übergangsbereich 14 ist im Querschnitt ebenfalls kreisrund. Beide Teile verlaufen koaxial zueinander. Sie verfügen somit über eine gemeinsame Längsachse 17.

Der Durchmesser 18 des Schaftgehäuses 12 ist größer als der Durchmesser 19 des Übergangsbereichs 14. Die Außenoberfläche des Übergangsbereichs 14 ist in jeder beliebigen radialen Richtung von der Außenoberfläche des Schaftgehäuses 12 beabstandet. Die Verjüngung des Übergangsbereichs 14 wird durch Kaltumformen ausgebildet.

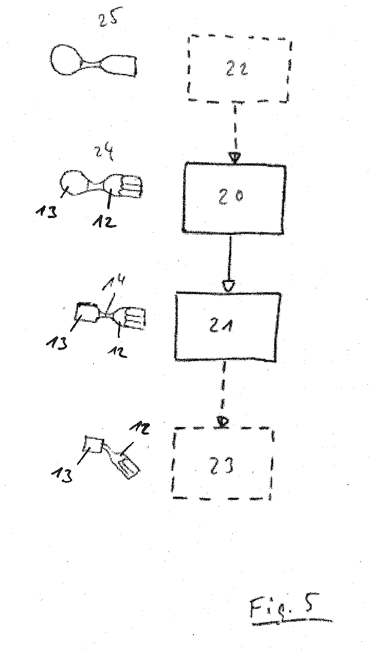

Figur 5 zeigt schematisch eine mögliche Durchführung des erfindungsgemäßen Verfahrens. In einem Schritt 20 wird ein Rohling 24 mit einem Schaftgehäuse und einem Kugelgehäuse bereitgestellt. Der Rohling 24 kann in einem unmittelbar vorangegangenen Schritt 22 hergestellt worden sein, und zwar aus einem Halbzeug 25. In das Halbzeug 25 wird eine Verjüngung eingebracht durch Kaltumformen.

In einem Schritt 21 wird das Schaftgehäuse 12 am Rohling 24 ausgeformt, und zwar ein Übergangsbereich des Rohlings zwischen dem Schaftgehäuse 12 und dem Kugelgehäuse 13 über den gesamten Querschnitt.

Je nach Anwendung des herzustellenden Gelenkgehäuses wird das Kugelgehäuse 13 relativ zum Schaftgehäuse 12 in einem nachfolgenden Verfahrensschritt 23 gebogen werden. Es wird überwiegend oder ausschließlich der Übergangsbereich 14 gebogen werden. Dadurch lässt sich dem Grunde nach eine beliebige winklige Ausrichtung des Schaftgehäuses 12 zum Kugelgehäuse 13 erreichen.

### Bezugszeichen

- 1: Gelenkgehäuse
- 2: Schaftgehäuse
- 3: Kugelgehäuse
- 4: Übergangsbereich
- 5: Gewindebohrung
- 6: Schlüsselfläche
- 7: Gewindekerndurchmesser
- 8: Durchgangsloch
- 9: Gewindebereich
- 11: Gelenkgehäuse
- 12: Schaftgehäuse
- 13: Kugelgehäuse
- 14: Übergangsbereich
- 15: Gewindebohrung
- 16: Schlüsselfläche
- 17: Längsachse
- 18: Durchmesser
- 19: Durchmesser
- 20: Bereitstellen
- 21: Verjüngen
- 22: Herstellen
- 23: Biegen
- 24: Rohling
- 25: Halbzeug

## Patentansprüche

1. Gelenkgehäuse (11) für eine Spurstange, mit einem Schaftgehäuse (12) zur Verbindung mit einem Axialzapfen und einem Kugelgehäuse (13) zur Aufnahme eines Kugelgelenks, wobei das Schaftgehäuse (12) eine axiale Bohrung (15) mit Innengewinde zur Aufnahme des Axialzapfens aufweist, **dadurch gekennzeichnet, dass** das Schaftgehäuse (12) und das Kugelgehäuse (13) durch einen über den gesamten Querschnitt gegenüber dem Schaftgehäuse (12) verjüngten Übergangsbereich (14) miteinander verbunden sind, wobei der Übergangsbereich (14) mit Bezug auf seine Längsachse (17) gekrümmt ausgebildet ist.

2. Gelenkgehäuse nach Anspruch 1, **dadurch gekennzeichnet, dass** die Querschnittskonturen des Schaftgehäuses (12) und des Übergangsbereichs (14) gleich ausgebildet sind, die Querschnittskontur des Übergangsbereichs (14) jedoch kleiner skaliert ausgebildet ist.

3. Gelenkgehäuse nach einem der vorangehenden Ansprüche, **dadurch gekennzeichnet, dass** der Übergangsbereich (14) und das Schaftgehäuse (12) zumindest teilweise koaxial verlaufen.

4. Gelenkgehäuse nach einem der vorangehenden Ansprüche, **dadurch gekennzeichnet, dass** die Querschnittskontur des Übergangsbereichs (14) kreisrund ausgebildet ist.

5. Verfahren zur Herstellung eines Gelenkgehäuses (11) für eine Spurstange, wobei ein Rohling (24) bereitgestellt (20) wird, wobei aus einem Bereich des Rohlings (24) ein Schaftgehäuse (12) zur Verbindung mit einem Axialzapfen und aus einem anderen Bereich des Rohlings (24) ein Kugelgehäuse zur Aufnahme eines Kugelgelenks (13) ausgebildet wird, wobei in das Schaftgehäuse eine axiale Bohrung mit Innengewinde zur Aufnahme des Axialzapfens eingebracht wird, **dadurch gekennzeichnet, dass** am Rohling (24) ein Übergangsbereich zwischen dem Bereich für das Schaftgehäuse (12) und dem Bereich für das Kugelgehäuse (13) über den gesamten Querschnitt gegenüber dem Schaftgehäuse (12) verjüngt (21) wird, wobei der Übergangsbereich (14) durch Kaltumformung verjüngt wird, und dass nach der Verjüngung des Übergangsbereichs (14) das Kugelgehäuse (13) relativ zum Schaftgehäuse (12) gebogen (23) wird, wobei der Übergangsbereich (14) mit Bezug auf seine Längsachse (17) gekrümmt wird.

6. Verfahren nach Anspruch 5, **dadurch gekennzeichnet**, da ss der Übergangsbereich (14) über seinen gesamten Umfang verjüngt (21) und kaltumgeformt wird.

## Claims

1. Joint housing (11) for a track rod, having a shaft housing (12) for connection to an axial pin and a ball housing (13) for receiving a ball joint, the shaft housing (12) having an axial bore (15) with an internal thread for receiving the axial pin, **characterized in that** the shaft housing (12) and the ball housing (13) are connected to one another by a transition region (14) that is tapered over the entire cross-section with respect to the shaft housing (12), the transition region (14) being curved with respect to its longitudinal axis (17).

2. Joint housing according to claim 1, **characterized in that** the cross-sectional contours of the shaft housing (12) and of the transition region (14) are identically formed, but the cross-sectional contour of the transition region (14) is scaled smaller.

3. Joint housing according to one of the preceding claims, **characterized in that** the transition region (14) and the shaft housing (12) extend at least partially coaxially.

4. Joint housing according to one of the preceding claims, **characterized in that** the cross-sectional contour of the transition region (14) is circular.

5. Method of manufacturing a joint housing (11) for a track rod, wherein a blank (24) is provided (20), wherein a shaft housing (12) for connection to an axial pin is formed from one portion of the blank (24) and a ball housing for receiving a ball joint (13) is formed from another portion of the blank (24), wherein an axial bore with an internal thread for receiving the axial pin is made in the shaft housing, **characterized in that** on said blank (24), a transition region between the portion for the shaft housing (12) and the portion for the ball housing (13) is tapered (21) over the entire cross-section with respect to the shaft housing (12), the transition region (14) being tapered by cold forming, and **in that** after tapering the transition region (14), the ball housing (13) is bent with respect to the shaft housing (12), the transition region (14) being curved with respect to its longitudinal axis (17).

6. Method according to claim 5, **characterized in that** the transition region (14) is tapered (21) and cold-formed over its entire circumference.

## Revendications

1. Boîtier articulé (11) pour une barre de connexion, comprenant un boîtier d'arbre (12) pour la liaison avec un pivot axial et un boîtier de rotule (13) pour recevoir une articulation à rotule, le boîtier d'arbre (12) présentant un alésage axial (15) avec un filetage intérieur pour recevoir le pivot axial, **caractérisé en ce que** le boîtier d'arbre (12) et le boîtier de rotule (13) sont reliés entre eux par une zone de transition (14) qui se rétrécit sur toute la section transversale par rapport au boîtier d'arbre (12), la zone de transition (14) étant en forme d'arc par rapport à son axe longitudinal (17).

2. Boîtier articulé selon la revendication 1, **caractérisé en ce que** les contours de la section transversale du boîtier d'arbre (12) et de la zone de transition (14) sont formés de manière identique, mais le contour de la section transversale de la zone de transition (14) est mis à l'échelle plus petite.

3. Boîtier articulé selon l'une des revendications précédentes, **caractérisé en ce que** la zone de transition (14) et le boîtier d'arbre (12) s'étendent au moins partiellement de manière coaxiale.

4. Boîtier articulé selon l'une des revendications précédentes, **caractérisé en ce que** le contour de la section transversale de la zone de transition (14) est circulaire.

5. Méthode de fabrication d'un boîtier articulé (11) pour une barre de connexion, dans lequel une ébauche (24) est prévue (20), dans lequel un boîtier d'arbre (12) pour la liaison avec un pivot axial est formé à partir d'une zone de l'ébauche (24) et un boîtier de rotule pour recevoir une articulation à rotule (13) est formé à partir d'une autre zone de l'ébauche (24), dans lequel un alésage axial avec un filetage intérieur pour recevoir le pivot axial est fait dans le boîtier d'arbre, **caractérisé en ce que,** sur l'ébauche (24), une zone de transition entre la zone pour le boîtier d'arbre (12) et la zone pour le boîtier de rotule (13) est rétrécie (21) sur toute la section transversale par rapport au boîtier d'arbre (12), la zone de transition (14) étant rétrécie par formage à froid, et **en ce que**, après le rétrécissement de la zone de transition (14), le boîtier de rotule (13) est plié par rapport au boîtier d'arbre (12), la zone de transition (14) étant courbée par rapport à son axe longitudinal (17).

6. Méthode selon la revendication 5, **caractérisée en ce que** la zone de transition (14) est rétrécie (21) et formée à froid sur toute sa circonférence.
